(19) Europäisches Patentamt
European Patent Office
Office européen des brevets

(11) Publication number: **0 212 787**
**A2**

(12) **EUROPEAN PATENT APPLICATION**

(21) Application number: **86304090.3**

(22) Date of filing: **29.05.86**

(51) Int. Cl.⁴: **C 08 G 77/46**, D 06 M 15/647

(30) Priority: **06.08.85 GB 8519760**

(43) Date of publication of application: **04.03.87 Bulletin 87/10**

(84) Designated Contracting States: **BE CH DE FR GB IT LI NL**

(71) Applicant: **Dow Corning Limited, Inveresk House 1 Aldwych, London WC2R 0HF (GB)**

(72) Inventor: **Westall, Stephen, 6 Wyndham Street, Barry South Glamorgan Wales (GB)**

(74) Representative: **Bullows, Michael et al, Dow Corning Limited Cardiff Road, Barry South Glamorgan CF6 7YL Wales (GB)**

(54) **Polyorganosiloxane-polyoxyalkylene copolymers.**

(57) A method for preparing polyorganosiloxane-polyoxyalkylene copolymers having polyoxyalkylene groups linked to Si atoms of the siloxane backbone via Si-O-C bonds and having at least one hydrolysable group linked to a different Si atom, comprises reacting a hydrosiloxane with less than the stoichiometric amount of a monoether of a polyoxyalkylene glycol and subsequently with a silane having olefinic unsaturation and a hydrolysable group. These copolymers may be used e.g. for treating textiles from aqueous or alcoholic solutions. They give a substantive effect, good soil release and a good handle.

EP 0 212 787 A2

0212787

# POLYORGANOSILOXANE-POLYOXYALKYLENE COPOLYMERS

This invention relates to a method of making polyorganosiloxane-polyoxyalkylene copolymers to copolymers made by that method and to processes in which they are used.

Copolymers comprising siloxane units and oxyalkylene units are well known and have been used as surfactants in polyurethane foams and as lubricants for textile fibres. Copolymers used as lubricants for textile fibres may comprise reactive groups which can condense to give either or both a crosslinked polymer and a substantively linked polymer on the textile. Such reactive groups may be hydrolysable groups, for example alkoxy groups, linked directly onto a silicon atom or linked to a silicon atom via a divalent group. Textile lubrication may be achieved by known copolymers, which comprise such reactive groups and linked to the siloxane chain via Si-C bonds, oxyalkylene groups in selected amounts in order to confer desired substantivity and oily soil release properties to textiles treated therewith. Whilst such copolymers are technically satisfactory in many respects, their production entails the use of an olefinically unsaturated polyoxyalkylene polymer which is caused to react with a polyorganosiloxane bearing Si-H groups by a catalysed hydrolsilylation reaction. Polyoxyalkylene polymers suitable for this reaction tend to be expensive.

We have now found that copolymers comprising siloxane units and oxyalkylene units and having reactive groups as aforesaid and somewhat similar properties to the copolymers referred to above may be formed by use of less expensive oxyalkylene polymers, namely those which have a hydroxyl group available for reaction with polyorganosiloxanes

bearing Si-H groups. In these copolymers the polyoxyalkylene groups are linked to the siloxane chain via Si-O-C bonds and it is somewhat surprising that these copolymers are sufficiently stable to hydrolysis to permit their use for treating textiles which are repeatedly subjected during their useful life to severe hydrolysis conditions.

The present invention provides a method for preparing a polyorganosiloxane-polyoxyalkylene copolymer, having at least one hydrolysable group, characterised in that the method comprises (1) reacting a polyorganosiloxane bearing Si-H groups with a monoether of a polyoxyalkylene glycol in an amount which is less than stoichiometric in the presence of a catalyst and (2) reacting the reaction product with a silane of the general formula $LSiA_a(OA')_{3-a}$, in which L denotes an aliphatic radical having 2 to 8 carbon atoms and having an olefinically unsaturated group, A denotes independently an alkyl radical having 1 to 8 carbon atoms, A' denotes a radical containing C, H and optionally O atoms and $\underline{a}$ is 0, 1 or 2 and OA' denotes a hydrolysable group, in a sufficient amount to react with remaining unreacted SiH groups in the presence of a hydrosilylation catalyst, whereby a polyorganosiloxane-polyoxyalkylene copolymer is formed, having polyoxyalkylene groups which are linked to Si atoms of the siloxane chain via Si-O-C bonds, said polyoxyalkylene groups providing from 25 to 75 percent by weight of the total weight of the copolymer and having at least one hydrolysable group linked to a different Si atom.

Polyorganosiloxanes bearing SiH groups, also called hydrosiloxanes, suitable for use in a method according to the invention, are well known in the art as are their methods of preparation. They have typically the following general formula

$$R - \underset{R}{\overset{R}{Si}} - (O - \underset{R}{\overset{R}{Si}})_x - (O - \underset{H}{\overset{R}{Si}})_y - O - \underset{R}{\overset{R}{Si}} - R$$

where each R independently denotes an alkyl or aryl group having 1 to 8 carbon atoms and $x$ and $y$ are chosen such that $x + y$ has a value from about 50 to about 500, $y/x+y$ has a value from 0.01 to 0.5 and $y$ has a value of at least 2. Preferably at least 50% of the R substituents are methyl radicals and more preferably substantially all R groups are methyl radicals. Any other substituent may be selected from ethyl, propyl, isobutyl or phenyl radicals. The preferred range of values of $x+y$ is from 80 to 250 and most preferred from about 100 to 180. The ratio $y/x+y$ is preferably from about 0.1 to about 0.2. It is to be understood that these values are average values and that some hydrosiloxanes may have values which are outside the specified range. Suitable examples of hydrosiloxanes for use in a method according to the invention have the following values for $x+y$ and for $y/x+y$.

| $x+y$ | $y/x+y$ |
|---|---|
| 98 | 0.122 |
| 148 | 0.203 |
| 164 | 0.116 |

Monoethers of polyoxyalkylene glycols, suitable for use in a method according to the invention have the general formula

$$HO-(C_nH_{2n}O)_zR'$$

where R' denotes an alkyl, aryl, alkaryl, aralkyl or acyl group having from 1 to 8 carbon atoms, $n$ has a value of from 2 to 8 and $z$ has an average value of at least 2. The use of a monoether of a polyoxyalkylene glycol, rather than a straightforward polyoxyalkylene glycol, is important because when the monoether of the polyoxyalkylene glycol

has reacted with the hydrosiloxane, the endgroup of the polyoxyalkylene is unreactive, allowing the silanes used subsequently for reaction with the remaining SiH groups to react with these SiH groups and not with the polyoxyalkylene. Preferably R' is a lower alkyl radical and most preferably R' denotes a methyl radical. In preferred monoethers of polyoxyalkylene glycols the value of n is 2 or 3. Most preferred however are those monoethers of polyoxyalkylene glycols where all oxyalkylene groups are oxyethylene groups. Most preferred monoether of a polyoxyalkylene glycol for use in a method according to the invention is the mono methylether of a polyoxyethylene glycol. The value of z is not critical as long as the amount of oxyalkylene groups of the polyorganosiloxane-polyoxyalkylene copolymer provides from 25 to 75% by weight of the total weight of the copolymer. Preferred monoethers of polyoxyalkylene glycols have a value of z of from 6 to 15. In the case of the most preferred materials, this results in a molecular weight of from about 300 to about 700. Suitable examples of these preferred monoethers of polyoxyethylene glycol have a molecular weight of about 350 ($z$ = 7.2) or 550 ($z$ = 11.8). The free hydroxyl group of a monoether of a polyoxyalkylene glycol suitable for use in a method according to the invention is believed to react with a SiH group of the hydrosiloxane and to result in a polyoxyalkylene group capped with a R' group and linked to a Si atom with a Si-O-C bond. Monoethers of polyoxyalkylene glycols suitable for use in a method according to the invention tend to be substantially cheaper than allyl substituted hydroxy polyoxyalkylenes or their ethers, which are used in the formation of corresponding copolymers where the oxyalkylene groups are bonded to Si via Si-C bonds. The amount of monoether of polyoxyalkylene glycols which is

reacted with a hydrosiloxane is chosen so that from 25 to 75 % by weight of the total copolymer according to the invention is provided by oxyalkylene groups with the proviso that the amount is less than is stoichiometrically required to react with all availabe SiH groups. Preferably more than one SiH group of each hydrosiloxane molecule is left unreacted with a monoether of a polyoxyalkylene glycol. Most preferably two SiH groups are left unreacted.

The reaction between a hydrosiloxane and a monoether of a polyoxyalkylene glycol is carried out in the presence of a catalyst. Such catalysts are known in the art and comprise for example $Ba(OH)_2$, $Sr(OH)_2$, $Na_2SiO_3$, $Na_2CO_3$, $SrCO_3$, $Ca(OH)_2$, $BaCO_3$, $Mg(OH)_2$, $MgCO_3$ or Pt complexes. A particularly suitable catalyst comprises $K_2CO_3$ as this gives a fast reaction rate. Catalysts for this reaction may be effective at levels of for example 0.5 to 5% by weight based on the combined weight of the reagents. The use of most of these catalysts is particularly advantageous because they can easily be removed from the reaction mixture by filtration.

A silane suitable for use in a method according to the invention may have as the hydrolysable group or groups an alkoxy, alkoxyalkoxy, aryloxy or acyloxy group. The unsaturated L group may suitably be a vinyl or allyl group. The preferred silanes for use in a method according to the invention are those where <u>a</u> is zero, A' is alkyl and L is vinyl. Most preferred silane is vinyl trimethoxysilane.

These silanes are reacted with any remaining SiH groups in the hydrosiloxane after the hydrosiloxane has been reacted with a monether of a polyoxyalkylene glycol. This reaction is performed in the presence of a hydrosilylation catalyst. Preferred catalysts for this reaction are Pt containing catalysts which may be for example

$H_2PtCl_6.xH_2O$. It is desirable that all SiH groups of the hydrosiloxane react with either a monoether of a polyoxyalkylene glycol or with a silane, however, trace amounts of unreacted SiH may be left on the copolymer.

Preferably both reactions are performed under substantially anhydrous conditions and in the presence of a solvent which is inert for all reactants. A particularly suitable solvent is toluene. It is important that the reaction of the hydrosiloxane with the monoether of a polyoxyalkylene glycol is carried out and allowed to go to completion before the hydrosilylation reaction of the silane with the remaining SiH groups of the hydrosiloxane is commenced. If the order were reversed or the silane were added before the first reaction was completed, the monoether of the polyoxyalkylene glycol could for example react with a hydrolysable group present on the silane. The resulting copolymer would not have the desired composition.

When a polyorganosiloxane-polyoxyalkylene copolymer is produced according to a method according to the invention a copolymer is obtained which has polyoxyalkylene groups which are linked to Si atoms of the siloxane chain in a Si-O-C bond, said polyoxyalkylene groups providing from 25 to 75% by weight of the total weight of the copolymer and at least one hydrolysable group linked to a different Si atom. These copolymers are particularly useful as textile treating agents.

The presence of at least one hydrolysable group per molecule allows the copolymer upon hydrolysis to react with other reactive groups for example on textile fibres or on other silicone molecules. These reactions can be described as follows:

$$\geq SiO\,A' + H_2O \longrightarrow \geq SiOH + A'OH$$

$$\geq Si\text{-}OH + HO\text{-}Si\text{-} \longrightarrow \geq Si\text{-}O\text{-}Si \leq + H_2O$$

$$\geq SiOH + HOC\text{- textile} \longrightarrow \geq Si\text{-}O\text{-}C \leq \text{ textile} + H_2O$$

This may result in a finish of the copolymer on the textile which is substantive against detergent washes. Another advantage when crosslinking of the copolymers occurs is the possible imparting of some of the properties of an elastomeric finish, for example improved crease recovery angle, to the textile material. In order to achieve this type of result the number of Si atoms in the siloxane backbone of the polyorganosiloxane used in the method according to this invention is preferably at least 50 (i.e. x+y = 48). It is however also possible to apply the polyorganosiloxane-polyoxyalkylene copolymer together with or after a crease resist resin on the textile.

The presence of 25 to 75% by weight of polyoxyalkylene gives the copolymer of the invention an improved oily soil release over those copolymers which have a smaller amount of polyoxyalkylene groups. Preferred polyorganosiloxane polyoxyalkylene copolymers have a sufficient amount of oxyalkylene in the copolymer to make the copolymer water dispersible and most preferably sufficient oxyalkylene is present to make the copolymer water soluble. This facilitates the application of the copolymer onto a textile material from, for example, a solution in water. The Si-O-C bond with which the polyoxyalkylene group is linked to the siloxane backbone is surprisingly stable in conditions where hydrolysis is encouraged. The most preferred polyorganosiloxane-polyoxyalkylene copolymers according to the invention have at least about 40% by weight of oxyalkylene groups of the total weight of the copolymer. The amount of oxyalkylene in the copolymer is chosen to be not more than 75% by weight in order to retain a good handle of the treated textile. Higher levels of oxyalkylene may result in a limp handle which is undesirable.

In another aspect of the invention there is provided a polyorganosiloxane-polyoxyalkylene copolymer having polyoxyalkylene groups which are linked to Si atoms of the siloxane chain, said polyoxyalkylene groups providing from 25 to 75% by weight of the total weight of the copolymer and having at least one hydrolysable group linked to a different Si atom, characterised in that the polyoxyalkylene groups are linked to the Si atoms via Si-O-C bonds.

The molecular weight (MW) of a copolymer according to the invention is to be chosen sufficiently high to contribute to a good handle of the treated textile. Preferably the MW is at least 3000 and most preferred is a MW of at least 5000.

A polyorganosiloxane-polyoxyalkylene copolymer according to the invention may be applied to a textile from an aqueous or alcoholic solution or dispersion according to any of the conventional textile treating methods such as for example padding. A condensation catalyst may be added to the solution or dispersion. Such catalysts are well known in the art and comprise for example tin salts or aminofunctional materials. An example of a suitable catalyst is dibutyltin bis(lauryl)mercaptide. Such catalyst may be added at levels of from 0.5 to 10% by weight based on the weight of the polyorganosiloxane-polyoxyalkylene copolymer.

The copolymer may be applied to the textile in an amount of from 0.1 to 5% by weight based on the weight of the textile. A good soil release, handle and substantive effect can however generally be obtained with addition levels of around 1% by weight based on the weight of the textile. When the copolymer has been applied to the textile, crosslinking may be affected by heating the textile to a sufficiently high temperature such as 150°C to condense the Si-OH groups.

The following examples in which all parts and percentages are expressed by weight, unless otherwise stated, exemplify the invention. Me denotes a $-CH_3$ group.

Example 1

To a $5 \times 10^{-3}$ $m^3$ split flask, equipped with stirrer, thermometer and Dean and Stark apparatus 2000g of dry toluene and 1040g of monomethylether of polyoxyethylene glycol (average molecular weight 551) were added. The content of the flask was heated to reflux with agitation and any water present in the ether of the polyoxyethylene glycol was removed azeotropically; 2.7 $cm^3$ of water were collected. The content of the flask was cooled and the Dean and Stark apparatus replaced with a reflux condenser. An inert atmosphere was introduced into the flask. 16.8g of finely ground potassium carbonate was added to the flask and the mixture was heated to 80°C with vigorous agitation. 721.8g of a hydrosiloxane of average composition

$$Me_3Si(OSiMe_2)_{118}(OSiMeH)_{30}OSiMe_3$$

were added slowly to the flask. Hydrogen gas was evolved from the reaction mixture. When all the hydrosiloxane had been added the temperature was kept at 80°C until hydrogen evolution ceased. The total reaction time was about 5 hours. The content of the flask was cooled to 25°C and potassium carbonate was removed by filtration. 0.33 $cm^3$ of a 10% w/w solution of $H_2PtCl_6.xH_2O$ in isopropanol was added to the flask and the mixture was heated to 80°C with agitation. 20g of vinyltrimethoxysilane were added to the mixture and the temperature was maintained at 80°C for 1 hour. No further trace of -Si-H was found upon analysis of the reaction mixture by infrared spectroscopy. Toluene was removed from the flask under a reduced pressure of $7 \times 10^2$ Pa using a maximum temperature in the flask of 83°C.

1,617g of a first example polyorganosiloxane-polyoxyalkylene copolymer were obtained. This was a clear, amber fluid with a viscosity of 310 mPa.s at 25°C. The copolymer had upon analysis 3.77% methoxy groups by weight, where the theoretical value was calculated at 3.99%. The amount of oxyethylene by weight was 55.1% of the total weight of the polymer. The average composition of the product is believed to be

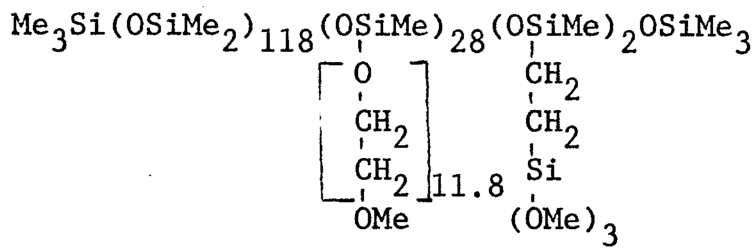

Example 2

The same procedure was followed as in example 1 for the preparation of a second example polyorganosiloxane-polyoxyalkylene copolymer except that 40.4 parts of a hydrosiloxane of the average composition

$$Me_3Si(OSiMe_2)_{145}(OSiMeH)_{19}OSiMe_3$$

were reacted with 31.4 parts of the monomethylether of polyoxyethylene glycol (MW 551) and later with one part of vinyltrimethoxysilane.

This second example copolymer had an oxyalkylene content of 40.7% by weight and 2.68% methoxy groups by weight (compared with 2.86% calculated). The second example copolymer had an average composition

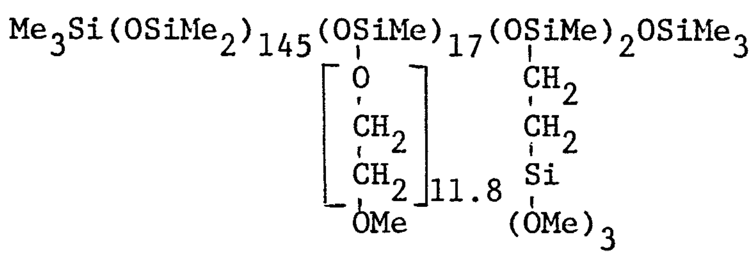

Example 3

The same procedure was followed as in example 1 for the preparation of a third example polyorganosiloxane-polyoxyalkylene copolymer except that 40.4 parts of a hydrosiloxane of the average composition

$$Me_3Si(OSiMe_2)_{145}(OSiMeH)_{19}OSiMe_3$$

were reacted with 18.8 parts of the monomethylether of polyoxyethylene glycol (MW 350) and later with one part of vinyltrimethoxysilane.

This third example copolymer had an oxyalkylene content of 29.6% by weight and 2.8% methoxy groups by weight (compared with 3.8% calculated). The third example copolymer had an average composition

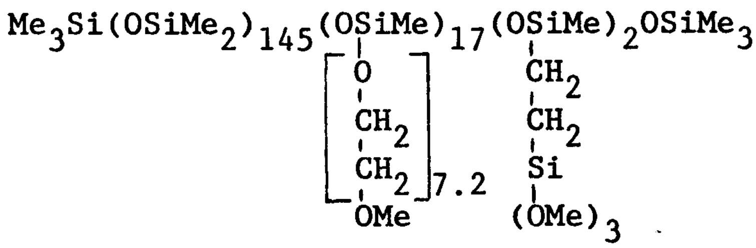

Example 4

The same procedure was followed as in example 1 for the preparation of a fourth example polyorganosiloxane-polyoxyalkylene copolymer except that 24.3 parts of a hydrosiloxane of the average composition

$$Me_3Si(OSiMe_2)_{86}(OSiMeH)_{12}OSiMe_3$$

were reacted with 18.5 parts of the monomethylether of polyoxyethylene glycol (MW 551) and later with one part of vinyltrimethoxysilane.

This fourth example copolymer had an oxyalkylene content of 39.8% by weight and 2.52% methoxy groups by weight (compared with 3.5% calculated). The fourth example copolymer had an average composition

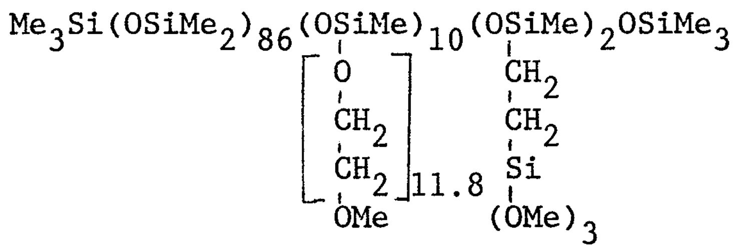

Example 5

Three textile fabric samples of a lightweight 65/35 polyester/cotton blend shirting fabric, which was undyed and scoured, were treated as follows.

A first textile fabric sample was treated by pad-application with 1% by weight of the fabric of a high molecular weight silanol terminated polydimethylsiloxane fluid used as a 40% by weight aqueous emulsion. Co-applied with the siloxane were pre-hydrolysed methyltrimethoxysilane and an emulsion of dibutyltin bis(lauryl)mercaptide. The ratio siloxane:silane:tin salt was 20:1:2.

A second textile fabric sample was treated by pad-application with 1% by weight of the fabric of the first example polyorganosiloxane-polyoxyalkylene copolymer applied as an aqueous solution. Co-applied with the copolymer was an emulsion of dibutyltin bis(lauryl)mercaptide. The ratio copolymer:tin salt was 1:0.05.

A third example textile fabric sample was left untreated. All three textile fabric samples were dried and cured for 3 minutes at 150°C in a laboratory Stenter.

The first and second textile fabric samples possessed a much smoother and softer handle than the third textile fabric sample.

The water-wettability of all samples was determined by placing 0.5 $cm^3$ of water in a drop onto the sample and measuring the time necessary for complete wet-out.

| | Wet-Out Time (Seconds) |
|---|---|
| First sample | 123.3 |
| Second sample | 35.0 |
| Third sample | 89.0 |

All samples were then subjected to five automatic washing machine cycles at 60°C in order to determine the substantivity of the treatments. After drying, the textile fabric samples were soiled with the following oily soils: butter, liquid paraffin, olive oil and mayonnaise. All samples were then tested for oily soil release according to AATCC, test method 130. The results obtained are shown below (1 = no release of soil and 5 = complete release of soil).

Soil Release Ratings

| | Butter | Liquid Paraffin | Olive Oil | Mayonnaise |
|---|---|---|---|---|
| first sample | 3.5 | 1.75 | 2.75 | 2.5 |
| second sample | 3.75 | 3.75 | 4.5 | 4.25 |
| third sample | 3.5 | 2.75 | 3.5 | 3 |

It can be seen from the above tests that the textile fabric sample treated with the copolymer according to the invention gave a good handle and a substantive finish with better hydrophilic and oily soil-release properties than the comparative samples.

## CLAIMS

1. A method for preparing a polyorganosiloxane-polyoxyalkylene copolymer, having at least one hydrolysable group, characterised in that the method comprises (1) reacting a polyorganosiloxane bearing Si-H groups with a monoether of a polyoxyalkylene glycol in an amount which is less than stoichiometric in the presence of a catalyst and (2) reacting the reaction product with a silane of the general formula $LSiA_a(OA')_{3-a}$, in which L denotes an aliphatic radical having 2 to 8 carbon atoms and having an olefinically unsaturated group, A denotes independently an alkyl radical having 1 to 8 carbon atoms, A' denotes a radical containing C, H and optionally O atoms and $\underline{a}$ is 0, 1 or 2 and OA' denotes a hydrolysable group, in a sufficient amount to react with remaining unreacted SiH groups in the presence of a hydrosilylation catalyst, whereby a polyorganosiloxane-polyoxyalkylene copolymer is formed, having polyoxyalkylene groups which are linked to Si atoms of the siloxane chain via Si-O-C bonds, said polyoxyalkylene groups providing from 25 to 75 percent by weight of the total weight of the copolymer and having at least one hydrolysable group linked to a different Si atom.

2. A method according to Claim 1 further characterised in that the polyorganosiloxane bearing Si-H groups has the general formula

$$R - \underset{R}{\overset{R}{Si}} - (O - \underset{R}{\overset{R}{Si}})_x - (O - \underset{H}{\overset{R}{Si}})_y - O - \underset{R}{\overset{R}{Si}} - R$$

where each R independently denotes an alkyl or aryl group having 1 to 8 carbon atoms and $\underline{x}$ and $\underline{y}$ are chosen such that $\underline{x} + \underline{y}$ has a value from about 50 to about 500 and $\underline{y/x+y}$ has a value from 0.01 to 0.5 and $\underline{y}$ has a value of at least 2.

3. A method according to Claim 2 further characterised in that the value of x + y is in the range from about 100 to 180 and y/x+y is in the range of from 0.1 to 0.2.

4. A method according to Claim 1 further characterised in that the monoether of a polyoxyalkylene glycol has the general formula

$$HO-(C_nH_{2n}O)_zR'$$

where R' denotes an alkyl, aryl, alkaryl, aralkyl or acyl group having from 1 to 8 carbon atoms, n has a value of from 2 to 8 and z has an average value of at least 2.

5. A method according to Claim 4 further characterised in that the monoether of a polyoxyalkylene glycol is the monomethyl ether of a polyoxyethylene glycol.

6. A method according to Claim 4 further characterised in that the monoether of a polyoxyalkylene glycol has a molecular weight of from about 300 to about 700.

7. A method according to Claim 1 further characterised in that the silane is vinyltrimethoxysilane.

8. A polyorganosiloxane-polyoxyalkylene copolymer having polyoxyalkylene groups which are linked to Si atoms of the siloxane chain, said polyoxyalkylene groups providing from 25 to 75% by weight of the total weight of the copolymer and having at least one hydrolysable group linked to a different Si atom, characterised in that the polyoxyalkylene groups are linked to the Si atoms via Si-O-C bonds.

9. A polyorganosiloxane-polyoxyalkylene copolymer according to Claim 8 further characterised in that the copolymer has a molecular weight of at least 5000.

10. A method of treating a textile which comprises applying to the textile a polyorganosiloxane-polyoxyalkylene copolymer characterised in that the copolymer is a copolymer according to Claim 8 or a copolymer made by a method according to any one of Claims 1 to 7.

11. A treated textile produced by application to the textile of a composition comprising a copolymer made by a method according to any one of Claims 1 to 7 or a copolymer according to either one of Claims 8 and 9.